# EUROPEAN PATENT SPECIFICATION

(11) **EP 1 494 238 B1**
(45) Date of publication and mention of the grant of the patent: **23.12.2009**
(21) Application number: 04300249.2
(22) Date of filing: 29.04.2004
(51) Int. Cl.: G11B 27/031

(54) **Method and apparatus for editing a data stream**
Verfahren und Vorrichtung zum Editieren eines Datenstromes
Procédé et appareil pour éditer un flux de données

(30) Priority: 01.07.2003 EP 03403201
(43) Date of publication of application: 05.01.2005
(73) Proprietor: Thomson Licensing, 92100 Boulogne-Billancourt (FR)
(72) Inventor: Adolph, Dirk, 30952 Ronnenberg (DE); Janssen, Uwe, 30926 Seelze (DE); Li, Hui, 30419 Hannover (DE); Schiller, Harald, 30539 Hannover (DE); Winter, Marco, 30173 Hannover (DE)
(74) Representative: Hartnack, Wolfgang

(56) References cited:
- EP-A- 1 102 276
- US-A1- 2003 052 910

## Description

The invention relates to the field of editing data streams, and more particularly to data streams having assigned meta-data.

### Background

Using an universal unique identifier (UUID) for encoding metadata is known from the prior art, cf. http://www. jpeg. org/metadata /wg1n2600.doc. An UUID is an identifier that is unique with respect to the space of all UUIDs. A UUID can be used for multiple purposes, from tagging objects with an extremely short lifetime, to reliably identifying very persistent objects across a network.

The generation of UUIDs does not require a registration authority for each single identifier. Instead, it requires a unique value over space for each UUID generator. This spatially unique value is specified as an IEEE 802 address, which is usually already applied to network-connected systems. This 48-bit address can be assigned based on an address block obtained through the IEEE registration authority. This UUID specification assumes the availability of an IEEE 802 address, see http://www.opengroup.org/onlinepubs/ 9629399/apdxa.htm. That specification also shows algorithms for UUID generators.

Further, EP 1372343 A2 shows a method for using UUIDs in the context of streaming applications.

US 2003/0052910 A1 discloses assigning an ID to a video segment and assigning to this video segment metadata which are also referenced by that ID. In case a video segment is edited, the ID is manipulated, too.

### Invention

The invention provides an improved editing of a data stream which also encompasses the updating of the metadata that is assigned to the data stream.
The invention facilitates editing a data stream, the data stream having a unique identifier and assigned metadata, whereby the data stream can be edited independently from the metadata thereby updating the metadata correspondingly, if necessary. The updating operation, if any, is determined by means of a decision matrix or metric.
When the data stream is edited the original unique identifier of the data stream is replaced by a new one. The former unique identifier is stored in metadata history data. This is necessary in order to map the unique identifier of metadata which has not been updated in accordance with their decision matrix to the new unique identifier.
In accordance with a preferred embodiment of the invention the unique identifiers are generated in accordance with the UUID specification.
In accordance with a further preferred embodiment of the invention the updating operation as determined by means of the decision matrix is output as a suggestion for a user. The user can accept the suggested updating operation or decline the suggestion in order to specify a user selected updating alternative.

Aspects of the invention are defined in the independent claims.
- performing an editing operation on the data stream;
- assigning a second unique identifier of the identifier space to the data stream;

Advantageous additional embodiments of the invention are disclosed in the respective dependent claims.

### Drawings

Exemplary embodiments of the invention are described with reference to the accompanying drawings, which show in:
- Fig. 1: block diagram of an editing apparatus for a data stream;
- Fig. 2: various editing operations performed on the data stream;
- Fig. 3: how different editing operations can affect metadata links;
- Fig. 4: a decision matrix;
- Fig. 5: deletion of the data stream while keeping certain metadata.

### Exemplary embodiments

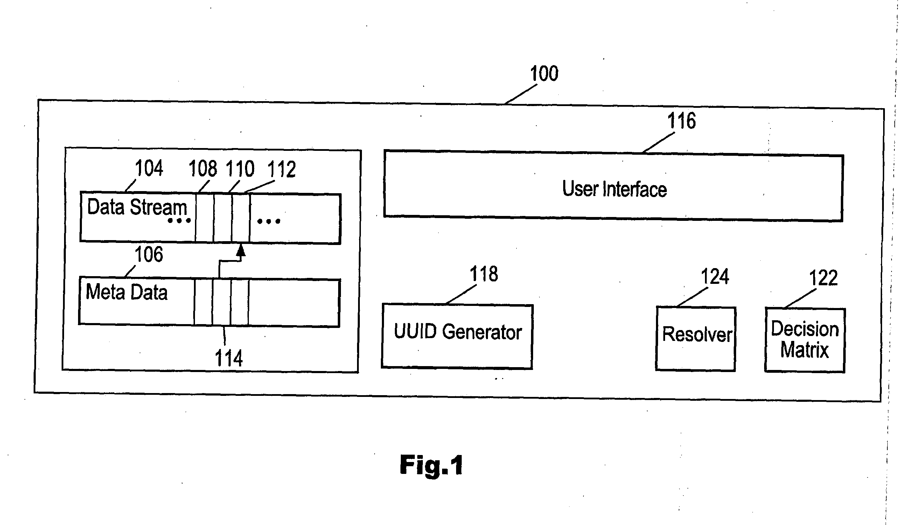

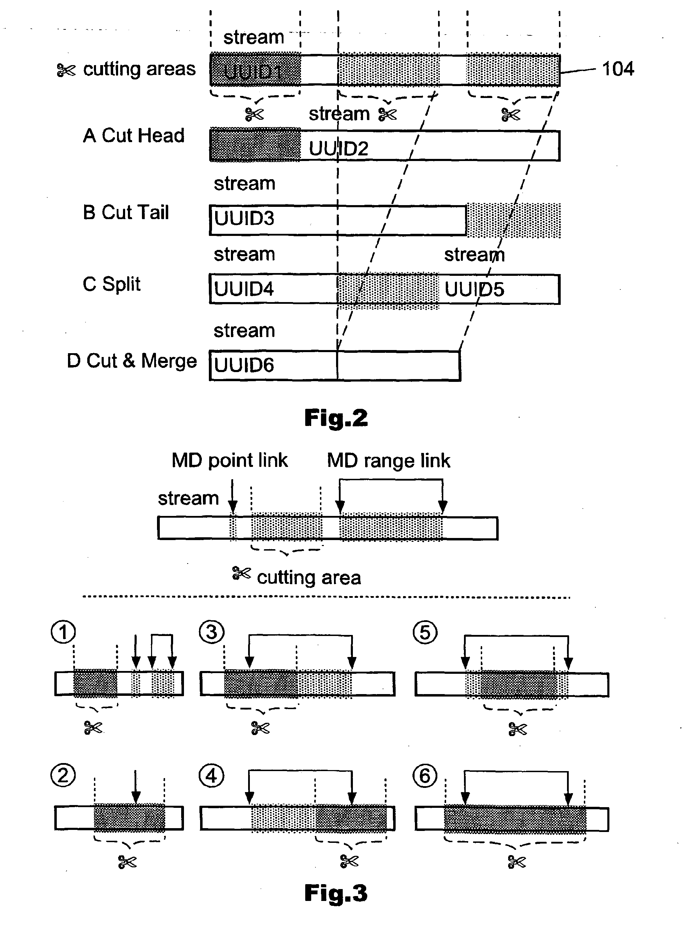

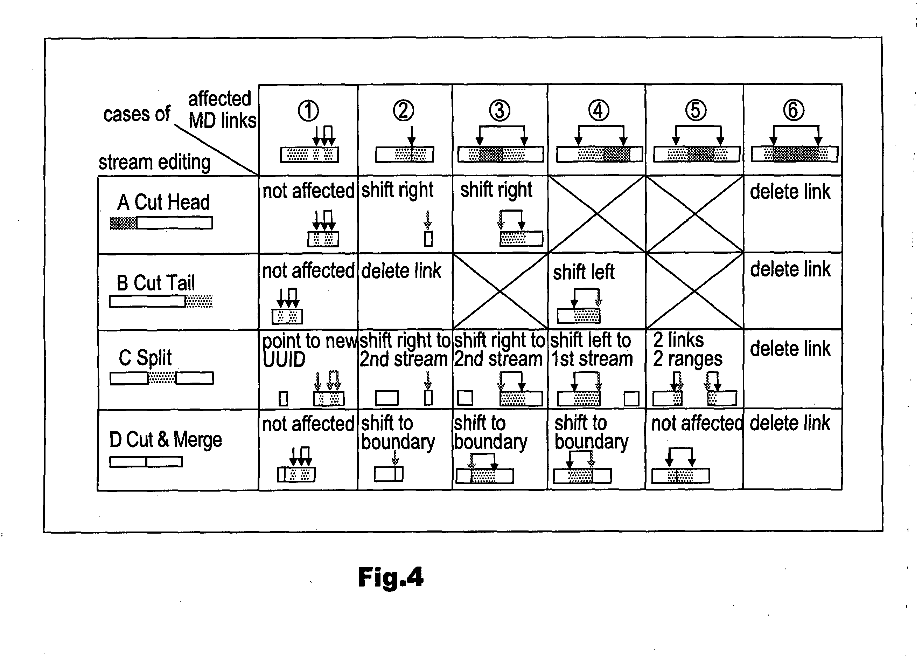

Figure 1 shows a block diagram of an editing apparatus 100, such as a DVB or Blue-ray Disc (BD) recorder. Editing apparatus 100 has storage 102 for storing data stream 104 and metadata 106.
Data stream 104 consists of a sequence of data packets 108, 110, 112, ... . These data packets each have a data packet identifier (ID) for identifying the data packet within data stream 104.
Each entry in metadata 106 is a tuple of the meta information and the metadata link. The meta information can be any information regarding the data stream 104 which can be of interest for a user. For example, the meta information can contain the text for a subtitle when the data stream is a video sequence. Another example is that the meta information contains information on the actors or other background information of the movie.
The metadata link has one or more data packet identifiers to identify the data packet within data stream 104 to which the meta information is assigned. The data stream to which the data packet identifier belongs is identified by the UUID of that data stream, i.e. data stream 104 in the example considered here.
For example, tuple 114 contained in metadata 106 has a metadata link comprising the UUID of data stream 104 and the data packet identifier of data packet 112 contained in data stream 104. This way the meta information contained in tuple 114 is unequivocally assigned to data packet 112.
Editing apparatus 100 includes a user interface 116 by means of which a user can edit data stream 104 which is stored in storage 102. This encompasses various editing operations, such as cut head, cut tail, split, and cut and merge operations, as will be explained in more detail below with reference to figure 2. The editing of the data stream 104 is performed independently of metadata 106. The edited data stream 104 is assigned to another UUID. The new UUID is provided by UUID generator 118. The former UUID of data stream 104 is stored in history data. History data belongs to metadata 106. Each object having an UUID also has history data which carries old or outdated UUIDs which had been previously assigned to the object but which are no longer valid. The old UUIDs are stored in order to enable mapping to the new UUIDs.
After an editing operation has been performed with respect to data stream 104 it is determined by means of decision matrix 122 whether an updating operation of metadata 106 is required, and if so, which updating operation is to be performed. Figure 4 shows an example for such a decision matrix.
Resolver 124 can access history data to provide a link resolution mechanism. For example, when data stream 104 has been edited and it has been decided by means of decision matrix 122 that no updating of metadata 106 is required, data stream 104 has a new UUID while the UUID of the metadata link of tuple 114 still remains the same. Through the intermediary of resolver 124 and history data it is ensured that tuple 114 is still unequivocally assigned to data packet 112 of data stream 104.
In operation a user performs an editing operation through user interface 116. This invokes UUID generator 118 which provides a new UUID for data stream 104. The former UUID of data stream 104 is stored in history data.
By means of decision matrix 122 it is determined whether updating of metadata 106 is required, and if so, which updating operation or updating operations need to be performed. The updating operation or the updating operations can be performed automatically. Alternatively the updating operation or the updating operations are output as a suggestion via user interface 116. The suggestion provided by decision matrix 122 can be accepted, modified or declined by a user. During playback of edited data stream 104 the metadata contained in tuple 114 need to be accessed. As the UUID contained in tuple 114 does not belong to any valid data stream anymore, resolver 124 is invoked which maps the UUID contained in tuple 114 to the new UUID of data stream 104.

Fig. 2 shows a general overview about stream editing. The idea is, that any editing process affecting metadata links can be reduced to a single or a repeated selection out of the four cases A to D. For example the appending of a stream was omitted, because a metadata link pointing into the stream must not be changed for keeping consistency of metadata and essence. Also the case of changing the content instead of cutting it out are commutable.
The topmost data stream in Fig. 2 shows the original data stream 104 before editing. Every stream is marked by an UUID (Universally Unique Identifier; IETF draft from February 4, 1998) by which it can be identified independently from its location. Any change of the stream as depicted in the four different cases A to D will generate a new UUID manifesting that the content is now a different one.
The distinction between the four cases A to D is created by the position of the cutting area and the treatment of emerging stream fragments. In case A and B the very beginning or quite the last part of the AV stream have been deleted. Thus the cases are named "Cut Head" and "Cut Tail". In case C and D the middle of the stream has been cut out, leaving the two fragments. By the way of further handling the two emerging fragments the case "Split" and the case "Cut & Merge" are distinguished. Case C "Split" will generate two independent streams both having its own UUID and case D will paste together the fragments, both having only one new UUID. Metadata links can be affected by these editing operations:
There are two types of metadata links, point links and range links. A point link describes a connection of a metadata item into an AV stream for a specific location on the time axis, e.g. for a specific picture in a video sequence. A range link, however, describes a connection of a metadata item into an AV stream for a specific segment on the time axis, e.g. for a chapter of a movie. While a point link specifies a start time only, the range link specifies a start time and an end time on the time axis by indicating the corresponding start and end data packet identifiers. Both metadata link types also include the simple case of a general link for metadata, which is a link relating to the complete data stream as long it is existing and which does not determine any picture or segment. A range link covering the full AV stream, i.e. having the start time and the end time of the AV stream itself, is the adequate representation.

Fig. 3 depicts six different implications on metadata (MD) links due to modifications within the AV stream. In principle the six cases are created by different arrangements of the two links and the cutting area. Case No. 1 shows an editing operation with unaffected point and range links. No. 2 is the single case for an affected metadata point link. And Nos. 3 to 6 depict affected metadata range links only: No. 3 is a range affected in the beginning, No. 4 is affected at the end, No. 5 is affected inwards and No. 6 is a range affected in totally. By combining the cases of stream editing with the cases of affected metadata links, a matrix is created encompassing all possibilities.

Such a decision matrix is shown in Fig. 4 by way of example. The matrix shows the cases of affected metadata (MD) links in horizontal and the cases of stream editing in vertical direction. The cross points of the matrix show the resulting modification. The decision matrix shows by way of example the rules for metadata link adoption to keep relations between metadata and essence consistent. The grey-shaded links indicate that a shift on the time axis has been executed for adaptation.
For example if a case No. 1 of figure 3 is present due to a cut head editing operation of type A, no updating of the metadata is required. In contrast an editing operation of type C in combination with case No. 1 requires that the metadata is updated. This is because the splitting of the original data stream results in the creation of two new UUIDs for both fragments of the data stream. It is therefore required to replace the UUID of the metadata link by one of the new UUIDs in order to unequivocally assign the corresponding tuple to one of the fragments. In addition this case requires that the data packet IDs within the metadata link are updated correspondingly.
A more detailed explanation of each individual element of the decision matrix is given in the following:
A1: The METADATA range link or METADATA point link is not affected by the editing, else no action necessary.
*B1*: See *A1*.
*C1*: The DATA stream has been split. Ensure that the pointer are referencing to the new UUID.
*D1*: See *A1*.

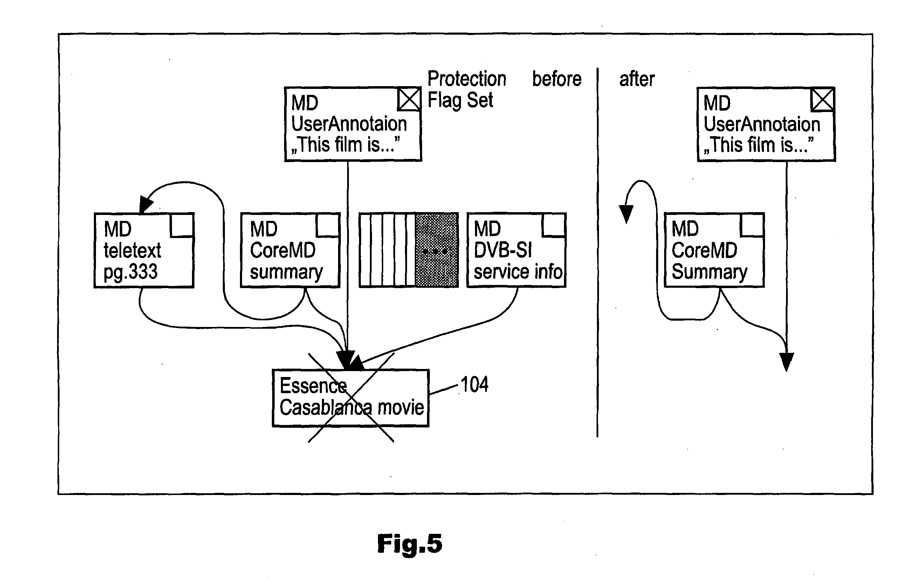

*A2*: Shift the time position on the time axis to a later time. This time must describe the first picture or audio frame decodable within the DATA stream. Typically this is referenced by a time stamp.
*B2*: The position is lost, else delete the METADATA point link. If the metadata belonging to the link does not have any other link and if it is not protected against deletion, then delete also the metadata, cf. Fig. 5.
*C2*: The DATA stream has been split. Shift the time position on the time axis to a later time. This time must describe the first picture or audio frame decodable within the DATA stream. Typically this is referenced by a time stamp. Ensure that the pointer is referencing to the new UUID.
*D2*: See *A2*.

*A3*: Shift the start time position on the time axis to a later time. This time must describe the first picture or audio frame decodable within the DATA stream. Typically this is referenced by a time stamp.
*B3*: Not possible.
*C3*: The DATA stream has been split. Shift the start time position on the time axis to a later time. This time must describe the first picture or audio frame decodable within the DATA stream. Typically this is referenced by a time stamp. Ensure that the pointer is referencing to the new UUID.
*D3*: See *A3*.

*A4*: Not possible. *B4*: Shift the end time position on the time axis to an earlier time. This time must describe the last picture or audio frame decodable within the DATA stream. Typically this is referenced by a time stamp.
*C4*: The DATA stream has been split. Shift the end time position on the time axis to an earlier time. This time must describe the last picture or audio frame decodable within the DATA stream. Typically this is referenced by a time stamp. Ensure that the pointer is referencing to the new UUID.
*D4*: See *B2*.

*A5*: Not possible.
*B5*: Not possible.
*C5*: The DATA stream has been split. Split the METADATA range link into 2 METADATA range links. Associated with the already existing start time, create a new end time. This must describe the last picture or audio frame decodable within the earlier DATA stream fragment. Typically this is referenced by a time stamp. Associated with the already existing end time, create a new start time. This must describe the first picture or audio frame decodable within the DATA stream. Typically this is referenced by a time stamp. Ensure that the both METADATA range links are referencing to the new UUIDs.
*D5*: See *A1*.

*A6*: The position is lost, else delete the METADATA range link. If the metadata belonging to the link does not have any other link and if it is not protected against deletion, then delete also the metadata, cf. Fig. 5.
*B6*: See *A6*.
*C6*: See *A6.*
*D6*: See *A6*.

When the complete data stream 104 is deleted it can be of interest to a user to still keep some items of the essential metadata information. An example for such situation is given in figure 5. In this example the data stream 104 contains the movie 'Casablanca'. The metadata of data stream 104 has a user annotation with a protection flag set, a MD teletext, a core MD summary and a MD DVB-SI service information. The core MD summary has pointers to the data stre104 and to other metadata like MD teletext and MD DVB-SI.

The right hand side of figure 5 shows metadata after having deleted data stream 104. Only the user annotation which is protected by the corresponding flag and the core and the summary which has pointers to other metadata entries have survived the erasure. This way the essential metadata information is kept for further use while obsolete metadata and memory is freed for other use.

It is important to note that any of the above described metadata updating operations can be performed automatically on the basis of the updating operation determined by the decision matrix, if any. However it is also possible to involve the user in the updating process, for example by outputting the suggested updating operation on the user interface for the user's confirmation, modification or declination.

## Claims

1. Method of editing a data stream (104), the data stream having a first unique identifier of an identifier space and having assigned metadata (106, MD), the metadata comprising meta information and a metadata link, the metadata link comprising the first unique identifier and at least one data packet identifier, said method including the steps of:
- performing an editing operation (100) on the data stream;
- assigning a second unique identifier of the identifier space to the edited data stream,
**characterised by**:
- storing the first unique identifier as history data for resolving (124) links of edited data and corresponding metadata;
- using a decision matrix (122) for updating the metadata link in accordance with the editing operation, wherein said decision matrix shows the cases of affected metadata links in horizontal direction and the cases of stream editing in vertical direction and a corresponding cross point in said decision matrix shows the resulting modification, such that relations between the metadata and the data stream are kept consistent.

2. Method according to claim 1, wherein the data stream is an audio and/or video stream.

3. Method according to claim 1 or 2, the unique identifier being a universal unique identifier (UUID).

4. Method according to claim 1, 2 or 3, the editing operation being a cut head, cut tail, split or cut and merge operation.

5. Method according to one of claims 1 to 4, the resolver task comprising mapping the first unique identifier to the second unique identifier in case the first unique identifier is kept in the metadata link in accordance with the decision matrix.

6. Method according to one of claims 1 to 5, wherein the metadata link identifies a range within the data stream.

7. Method according to one of claims 1 to 6, wherein the decision matrix specifies whether:
- the first unique identifier of the metadata link is to be replaced by the second unique identifier,
- the at least one data packet identifier needs to be shifted,
- the metadata is to be split,
- or the metadata is to be deleted.

8. Method according to one of claims 1 to 7, wherein an updating operation determined by means of the decision matrix is output as a suggestion for a user.

9. Method according to one of claims 1, to 8, wherein metadata having one or more pointers to other metadata is not deleted if an updating operation for the deletion of metadata is performed.

10. Computer program product for editing a data stream (104), the data stream having a first unique identifier of an identifier space and having assigned metadata (106, MD), the metadata comprising meta information and a metadata link, the metadata link comprising the first unique identifier and at least one data packet identifier, said computer program product having program means for performing the steps of:
- editing (100) the data stream;
- assigning a second unique identifier of the identifier space to the edited data stream,
**characterised by**:
- storing the first unique identifier as history data for resolving (124) links of edited data and corresponding metadata;
- using a decision matrix (122) for updating the metadata link in accordance with the editing operation, wherein said decision matrix shows the cases of affected metadata links in horizontal direction and the cases of stream editing in vertical direction and a corresponding cross point in said decision matrix shows the resulting modification, such that relations between the metadata and the data stream are kept consistent.

11. Product according to claim 10, the program means being adapted to perform the resolver task by mapping the first unique identifier to the second unique identifier in case the first unique identifier is kept in the metadata link in accordance with the decision matrix.

12. Apparatus for editing a data stream, the data stream having a first unique identifier of an identifier space and having assigned metadata (MD), the metadata comprising meta information and a metadata link (114), the metadata link comprising the first unique identifier and at least one data packet identifier, said apparatus including:
- means (116) being adapted for performing an editing op eration on the data stream;
- means (118) being adapted for assigning a second unique identifier of the identifier space to the edited data stream,
**characterised by**:
- means being adapted for storing the first unique identifier as history data for resolving (124) links of edited data and corresponding metadata;
- a decision matrix (122) for updating the metadata link in accordance with the editing operation, wherein said decision matrix shows the cases of affected metadata links in horizontal direction and the cases of stream editing in vertical direction and a corresponding cross point in said decision matrix shows the resulting modification, such that relations between the metadata and the data stream are kept consistent.

## Patentansprüche

1. Verfahren zum Editieren eines Datenstroms (104), der einen ersten eindeutigen Identifizierer eines Identifizierer-Raums aufweist und dem Metadaten (106, MD) zugeordnet sind, die Metainformationen und eine Metadatenverknüpung umfassen, die den ersten eindeutigen Identifizierer und wenigstens einen Datenpaket-Identifizierer einschließt, wobei das Verfahren die Schritte einschließt:
- Ausführen einer Editieroperation (100) bei dem Datenstrom;
- Zuordnen eines zweiten eindeutigen Identifizierers des Identifizierer-Raums zu dem editierten Datenstrom,
**gekennzeichnet durch:**
- Speichern des ersten eindeutigen Identifizierers als History-Daten zum Auflösen (124) von Verknüpfungen von editierten Daten und entsprechenden Metadaten:
- Verwenden einer Entscheidungs-Matrix (122) zur Aktualisierung der Metadatenverknüpfung im Einklang mit der Editieroperation, wobei die Entscheidungs-Matrix die Fälle von beeinflussten Metadatenverknüpfungen in horizontaler Richtung und die Fälle von Stromeditieren in vertikaler Richtung zeigt und ein entsprechender Koppelpunkt in der Entscheidungs-Matrix die resultierende Modifikation zeigt, so dass Beziehungen zwischen den Metadaten und dem Datenstrom konsistent gehalten werden.

2. Verfahren nach Anspruch 1, bei dem der Datenstrom ein Audio- und/oder Videostrom ist.

3. Verfahren nach Anspruch 1 oder 2, bei dem der eindeutige Identifizierer ein universeller eindeutiger Identifizierer (UUID) ist.

4. Verfahren nach Anspruch 1, 2 oder 3, bei dem die Editieroperation eine Kopfabschneide-, Schwanzabschneide-, Aufspaltungs- oder Abschneide- und Verschmelzungsoperation ist.

5. Verfahren nach einem der Ansprüche 1 bis 4, bei dem die Auflösungsaufgabe das Zuordnen des ersten eindeutigen Identisizierers zu dem zweiten eindeutigen Identifizierer umfasst, falls der erste eindeutige Identifizierer in der Metadatenverknüpfung im Einklang mit der Entscheidungs-Matrix gehalten wird.

6. Verfahren nach einem der Ansprüche 1 bis 5, bei dem die Metadatenverknüpfung einen Bereich innerhalb des Datenstroms identifiziert.

7. Verfahren nach einem der Ansprüche 1 bis 6, bei dem die Entscheidungs-Matrix spezifiziert, ob:
- der erste eindeutige Identifizierer der Metadatenverknüpfung durch den zweiten eindeutigen Identifizierer ersetzt werden soll,
- wenigstens ein Datenpaket-Identifizierer verschoben werden muss,
- die Metadaten aufzuspalten sind,
- oder die Metadaten zu löschen sind.

8. Verfahren nach einem der Ansprüche 1 bis 7, bei dem eine mittels der Entscheidungs-Matrix bestimmte Aktualisierungsoperation als Vorschlag für einen Benutzer ausgegeben wird.

9. Verfahren nach einem der Ansprüche 1 bis 8, bei dem Metadaten, die einen oder mehrere Zeiger zu anderen Metadaten haben, nicht gelöscht werden, wenn eine Aktualisierungsoperation für die Löschung von Metadaten ausgeführt wird.

10. Computerprogramm-Produkt zum Editieren eines Datenstroms (104), der einen ersten eindeutigen Identifizierer eines Identifizierer-Raums aufweist und dem Metadaten (106, MD) zugeordnet sind, die Metainformationen und eine Metadatenverknüpfung umfassen, die den ersten eindeutigen Identifizierer und wenigstens einen Datenpaket-Identifizierer einschließt, wobei das Computerprogramm-Produkt Programm-Mittel zur Ausführung der folgenden Schritte aufweist:
- Editieren (100) des Datenstroms;
- Zuordnen eines zweiten eindeutigen Identifizierers des Identifizierer-Raums zu dem editierten Datenstrom,
**gekennzeichnet durch:**
- Speichern des ersten eindeutigen Identifizierers als History-Daten zum Auflösen (124) von Verknüpfungen von editierten Daten und entsprechenden Metadaten;
- Verwenden einer Entscheidungs-Matrix (122) zur Aktualisierung der Metadatenverknüpfung in Einklang mit der Editieroperation, wobei die Entscheidungs-Matrix die Fälle von beeinflussten Metadatenverknüpfungen in horizontaler Richtung und die Fälle von Stromeditieren in vertikaler Richtung zeigt und ein entsprechender Koppelpunkt in der Entscheidungs-Matrix die resultierende Modifikation zeigt, so dass die Beziehungen zwischen den Metadaten und dem Datenstrom konsistent gehalten werden.

11. Produkt nach Anspruch 10, bei dem die Programm-Mittel so ausgebildet sind, dass sie die Auflösungsaufgabe durch Zuordnen des ersten eindeutigen Identifizierers zu dem zweiten eindeutigen Identifizierer ausführt, falls der erste eindeutige Identifizierer in der Metadatenverknüpfung im Einklang mit der Entscheidungs-Matrix gehalten wird.

12. Vorrichtung zum Editieren eines Datenstroms, der einen ersten eindeutigen Identifizierer eines Identifizierer-Raums aufweist und dem Metadaten (MD) zugeordnet sind, die Metainformationen und eine Metadatenverknüpfung (114) umfassen, die den ersten eindeutigen Identifizierer und wenigstens einen Datenpaket-Identifizierer umfasst, wobei die Vorrichtung einschließt:
- Mittel (116) zum Ausführen einer Editieroperation bei dem Datenstrom;
- Mittel (118) zum Zuordnen eines zweiten eindeutigen Identifizierers des Identifizierer-Raums zu dem editierten Datenstrom,
**gekennzeichnet durch:**
- Mittel zum Speichern des ersten eindeutigen Identidizierers als History-Daten zum Auflösen (124) von Verknüpfungen von editierten Daten und entsprechenden Metadaten;
- eine Entscheidungs-Matrix (122) zur Aktualisierung der Metadatenverknüpfung im Einklang mit der Editieroperation, wobei die Entscheidungs-Matrix die Fälle von beeinflussten Metadatenverknüpfungen in horizontaler Richtung und die Fälle von Stromeditieren in vertikaler Richtung zeigt und ein entsprechender Koppelpunkt in der Entscheidungs-Matrix die resultierende Modifikation zeigt, so dass die Beziehungen zwischen den Metadaten und dem Datenstrom konsistent gehalten werden.

## Revendications

1. Procédé pour éditer un flux de données (104), le flux de données possédant un premier identifiant unique d'un espace d'identifiants et possédant des métadonnées attribuées (106, MD), les métadonnées comprenant des méta-informations et un lien de métadonnées, le lien de métadonnées comprenant le premier identifiant unique et au moins un identifiant de paquet de données, ledit procédé incluant les étapes consistant à :
- réaliser une opération d'édition (100) sur le flux de données ;
- attribuer un deuxième identifiant unique de l'espace d'identifiants au flux de données édité,
**caractérisé par** :
- le stockage du premier identifiant unique en tant que données historiques pour la résolution (124) des liens des données éditées et des métadonnées correspondantes ;
- l'utilisation d'une matrice de décision (122) pour la mise à jour du lien de métadonnées en fonction de l'opération d'édition, où ladite matrice de décision présente les cas de liens de métadonnées affectés dans la direction horizontale et les cas d'édition de flux dans la direction verticale, et un point de croisement correspondant de ladite matrice de décision présente la modification obtenue, de sorte que les relations entre les métadonnées et le flux de données soient maintenues cohérentes.

2. Procédé selon la revendication 1, dans lequel le flux de données est un flux audio et/ou vidéo.

3. Procédé selon la revendication 1 ou 2, l'identifiant unique étant un identifiant unique universel (UUID).

4. Procédé selon la revendication 1, 2 ou 3, l'opération d'édition consistant en une opération de coupe de début, de coupe de fin, de division ou de coupe, puis de fusion.

5. Procédé selon une des revendications 1 à 4, la tâche de résolution comprenant le mappage du premier identifiant unique sur le deuxième identifiant unique, dans le cas où le premier identifiant unique est conservé dans le lien de métadonnées conformément à la matrice de décision.

6. Procédé selon une des revendications 1 à 5, dans lequel le lien de métadonnées identifie une plage au sein du flux de données.

7. Procédé selon une des revendications 1 à 6, dans lequel la matrice de décision spécifie si :
- le premier identifiant unique du lien de métadonnées doit être remplacé par le deuxième identifiant unique,
- l'au moins un identifiant de paquet de données doit être déplacé,
- les métadonnées doivent être divisées,
- ou les métadonnées doivent être supprimées.

8. Procédé selon une des revendications 1 à 7, dans lequel une opération de mise à jour déterminée au moyen de la matrice de décision est émise en tant que suggestion pour un utilisateur.

9. Procédé selon une des revendications 1 à 8, dans lequel des métadonnées possédant un ou plusieurs pointeurs vers d'autres métadonnées ne sont pas supprimées si une opération de mise à jour pour la suppression de métadonnées est réalisée.

10. Produit de programme informatique, pour éditer un flux de données, le flux de données possédant un premier identifiant unique d'un espace d'identifiants et possédant des métadonnées attribuées, les métadonnées comprenant des méta-informations et un lien de métadonnées, le lien de métadonnées comprenant le premier identifiant unique et au moins un identifiant de paquet de données, ledit produit de programme informatique possédant un moyen de programme pour réaliser les étapes consistant à .
- éditer (100) le flux de données ;
- attribuer un deuxième identifiant unique de l'espace d'identifiants au flux de données édité,
**caractérisé par** :
- le stockage du premier identifiant unique en tant que données historiques pour la résolution (124) des liens des données éditées et des métadonnées correspondantes ;
- l'utilisation d'une matrice de décision (122) pour la mise à jour du lien de métadonnées en fonction de l'opération d'édition, où ladite matrice de décision présente les cas de liens de métadonnées affectés dans la direction horizontale et les cas d'édition de flux dans la direction verticale, et un point de croisement correspondant de ladite matrice de décision présente la modification obtenue, de sorte que les relations entre les métadonnées et le flux de données soient maintenues cohérentes.

11. Produit selon la revendication 10, le moyen de programme étant adapté pour réaliser la tâche de résolution en mappant le premier identifiant unique sur le deuxième identifiant unique, dans le cas où le premier identifiant unique est conservé dans le lien de métadonnées conformément à la matrice de décision.

12. Appareil pour éditer un flux de données (104), le flux de données possédant un premier identifiant unique d'un espace d'identifiants et possédant des métadonnées attribuées (MD), les métadonnées comprenant des méta-informations et un lien de métadonnées (114), le lien de métadonnées comprenant le premier identifiant unique et au moins un identifiant de paquet de données, l'appareil incluant :
- un moyen (116) adapté pour réaliser une opération d'édition sur le flux de données ;
- un moyen (118) adapté pour attribuer un deuxième identifiant unique de l'espace d'identifiants au flux de données édité,
**caractérisé par** :
- un moyen adapté pour stocker le premier identifiant unique en tant que données historiques pour la résolution (124) des liens des données éditées et des métadonnées correspondantes ;
- une matrice de décision (122) pour mettre à jour le lien de métadonnées en fonction de l'opération d'édition, où ladite matrice de décision présente les cas de liens de métadonnées affectés dans la direction horizontale et les cas d'édition de flux dans la direction verticale, et un point de croisement correspondant de ladite matrice de décision présente la modification obtenue, de sorte que les relations entre les métadonnées et le flux de données soient maintenues cohérentes.
